# FASCICULE DE BREVET EUROPEEN

(11) **EP 0 815 729 B1**
(45) Date de publication et mention de la délivrance du brevet: **24.10.2001**
(21) Numéro de dépôt: 96201958.4
(22) Date de dépôt: 30.06.1996
(51) Int. Cl.: A21C 3/00, A21C 11/20, A21C 1/06, B29B 7/42, A23P 1/12

(54) **Procédé de fabrication d'un produit alimentaire par extrusion**
Vorrichtung zur Herstellung eines extrudierten Nahrungsprodukt
Method of producing a food product by extrusion

(43) Date de publication de la demande: 07.01.1998
(73) Titulaire: SOCIETE DES PRODUITS NESTLE S.A., 1800 Vevey (CH)
(72) Inventeur: Pfaller, Werner, 1350 Orbe (CH); Geromini, Osvaldo, 1358 Valeyres, Rances (CH); Heck, Ernst, 1302 Vufflens-la-Ville (CH)
(74) Mandataire: Wavre, Claude-Alain

(56) Documents cités:
- WO-A-95/23522
- DE-A- 4 128 630
- DE-A- 4 308 059

## Description

La présente invention a pour objet un procédé de fabrication d'un produit alimentaire par extrusion et une installation pour la mise en oeuvre du procédé.

EP0169126 (CLEXTRAL) décrit un procédé de fabrication d'un produit alimentaire composite à l'aide d'un extrudeur comportant plusieurs zones successives dans lequel un courant de matière alimentaire sortant d'une première zone comprenant un bivis est divisé en plusieurs courants indépendants dans une deuxième zone comprenant deux monovis, les deux courants indépendants subissant des traitements distincts, notamment des colorations distinctes dans cette deuxième zone et étant réunis dans une troisième zone comprenant une filière pour former un produit unique composite, notamment un produit comportant deux parties coextrudées colorées et/ou aromatisées différemment.

La présente invention a pour but de proposer un procédé et une installation prévoyant une utilisation particulièrement efficace et/ou versatile d'un extrudeur bivis permettant la fabrication d'un ou plusieurs produits alimentaires, notamment d'un produit alimentaire composite comportant plusieurs parties de compositions, textures et/ou couleurs différentes.

A cet effet, dans le procédé selon la présente invention, on introduit une première matière alimentaire à traiter dans un premier tronçon d'un extrudeur bivis, on introduit une deuxième matière alimentaire à traiter dans un deuxième tronçon de l'extrudeur bivis séparé du premier par un dispositif de séparation dynamique, on traite ces matières indépendamment chacune dans son tronçon de l'extrudeur, on extrude les deux masses obtenues en les faisant passer au travers d'au moins une filière, et l'on découpe le ou les produits extrudés.

De même, l'installation selon la présente invention comprend un extrudeur bivis séparé en deux tronçons distincts par un dispositif de séparation dynamique, au moins une filière et au moins un dispositif de découpe.

Un tel procédé et un tel appareil permettent effectivement une utilisation particulièrement efficace et/ou versatile d'un extrudeur bivis grâce à laquelle on peut fabriquer un ou plusieurs produits alimentaires, notamment un produit alimentaire composite comportant plusieurs parties de compositions, textures et/ou couleurs différentes.

Dans le présent exposé, l'expression "matière alimentaire" couvre tous les composants introduits ensemble ou séparément, simultanément ou successivement dans l'un ou l'autre des deux tronçons de l'extrudeur et traités tous ensemble au moins sur une partie de ce tronçon.

Pour mettre en oeuvre le présent procédé, on peut partir de matières alimentaires dont on peut produire par extrusion les produits alimentaires les plus divers tels que céréales pour petit déjeuner, céréales infantiles, amuses-bouches, panures, confiseries, pâtes alimentaires ou produits pour animaux familiers, par exemple.

On peut choisir les composants et leurs proportions respectives puis traiter ces matières dans l'extrudeur dans des conditions de pression, cisaillement et température adaptées aux caractéristiques du produit que l'on désire obtenir, notamment en fonction de la teneur en eau et du degré d'expansion que l'on désire obtenir après la filière.

On peut traiter une première matière et/ou une deuxième matière présentant une teneur en eau de 14-22% pour obtenir un produit expansé.

On peut déshydrater un tel produit expansé découpé jusqu'à une teneur en eau inférieure à 5%, par exemple.

On peut traiter une première et/ou une deuxième matière présentant une teneur en eau de 24-36% pour obtenir un produit non ou peu expansé.

On peut transformer en flocons le produit non ou peu expansé découpé par laminage et toastage, par exemple.

On peut prévoir de faire passer au moins une des deux matières au travers d'une filière après l'avoir soumise à un traitement intermédiaire, prévu entre une sortie de son tronçon de l'extrudeur et la filière, tel qu'une cuisson prolongée d'une matière destinée à la production de céréales pour petit-déjeuner présentant un bon goût de cuit, par exemple.

On peut partir de première et deuxième matières alimentaires semblables ou différentes et les traiter chacune dans son tronçon de l'extrudeur de manières semblables ou différentes.

On peut traiter ainsi une première et une deuxième matières semblables de manières semblables lorsqu'on désire augmenter la productivité d'un extrudeur dont les caractéristiques de longueur et de puissance sont trop élevées pour le type de produit que l'on veut fabriquer.

Dans ce cas, on peut faire passer les deux masses de matière traitée au travers de deux filières semblables ou au travers d'orifices semblables d'une filière commune, par exemple.

De préférence, on part de première et deuxième matières différentes et on les traite de manières différentes dans l'extrudeur, afin de pouvoir fabriquer avec un seul extrudeur des produits composites nouveaux comportant non seulement deux parties colorées et/ou aromatisées différemment, mais comportant plusieurs parties de compositions, textures et/ou couleurs différentes.

On peut en particulier coextruder une masse de matière traitée qui s'expanse et une masse de matière traitée qui ne s'expanse pas à la sortie de la filière, pour fabriquer des amuses-bouches expansés croquants fourrés d'une garniture moëlleuse, ou coextruder deux masses de matières traitées qui s'expansent à la sortie de la filière, pour fabriquer des amuses bouches croquants à deux composants de texture, goût et couleurs différents, par exemple.

L'installation pour la mise en oeuvre du procédé selon la présente invention comprend donc un extrudeur bivis séparé en deux tronçons distincts par un dispositif de séparation dynamique, au moins une filière et au moins un dispositif de découpe.

Le dispositif de séparation dynamique peut être réalisé sous forme d'une zone de blocage à pas inverse du bivis, par exemple.

Dans cette forme de réalisation du dispositif de séparation dynamique, on peut prévoir une ouverture de sortie du premier tronçon de l'extrudeur à cheval sur une zone de compression et la zone de blocage du bivis, par exemple.

On peut prévoir une ouverture de sortie du deuxième tronçon dans l'axe ou sur le côté de l'extrémité aval de l'extrudeur, par exemple.

L'ouverture de sortie de chaque tronçon peut être reliée par une conduite adéquate à une filière distincte, à une filière commune ou à des éléments distincts d'une même filière, par exemple.

On peut prévoir un dispositif d'alimentation pour chaque tronçon, sous forme d'une ou plusieurs ouvertures d'alimentation prévues dans un fourreau du bivis, à partir de l'extrémité amont de l'extrudeur pour le premier tronçon et à partir d'une zone de transport suivant la zone de blocage du bivis pour le deuxième tronçon, par exemple.

On peut prévoir une géométrie des vis adaptée, pour chaque tronçon, à la matière à traiter et au produit que l'on veut obtenir. On peut prévoir notamment des zones successives et/ou alternées de transport, compactage, compression, pétrissage ou mélange, par exemple. Pour définir ces différentes zones, on peut jouer sur le pas des vis, l'espace laissé libre pour la matière à traiter défini notamment par les diamètres respectifs des noyaux et des filets, ou l'intercalage de bilobes de différentes formes, par exemple. On peut également jouer sur une subdivision du fourreau de l'extrudeur en plusieurs compartiments indépendants dont on peut régler individuellement la température par circulation d'un fluide de refroidissement ou de chauffage, par exemple.

Enfin, l'énergie mécanique nécessaire pour traiter les première et deuxième matières alimentaires dans les deux tronçons de l'extrudeur et les faire passer au travers de la ou des filières peut être fournie par un seul moyen d'entraînement des vis du bivis, tel qu'un moteur électrique, par exemple.

Pour assurer le passage d'une matière alimentaire au travers d'une filière, on peut assister ou soulager ce moteur à l'aide d'une pompe positive telle qu'une pompe à engrenage branchée en amont de la filière, par exemple.

L'installation selon la présente invention est décrite ci-après en référence au dessin annexé dans lequel:
- la figure 1 représente schématiquement une forme de réalisation de l'installation destinée à traiter une première et une deuxième matières alimentaires semblables de manières semblables,
- la figure 2 représente schématiquement une forme de réalisation de l'installation destinée à traiter une première et une deuxième matières alimentaires différentes de manières différentes pour fabriquer deux produits différents,
- la figure 3 représente schématiquement une forme de réalisation de l'installation destinée à traiter une première et une deuxième matières alimentaires différentes de manières différentes pour fabriquer un produit composite coextrudé,
- la figure 4 représente schématiquement une forme de réalisation de la géométrie des vis de l'installation représentée à la figure 1,
- la figure 5 représente schématiquement une forme de réalisation de la géométrie des vis des installations représentées aux figures 2 et 3, et
- la figure 6 représente de manière plus détaillée la forme de réalisation du dispositif de séparation dynamique des vis représentées aux figures 4 et 5.

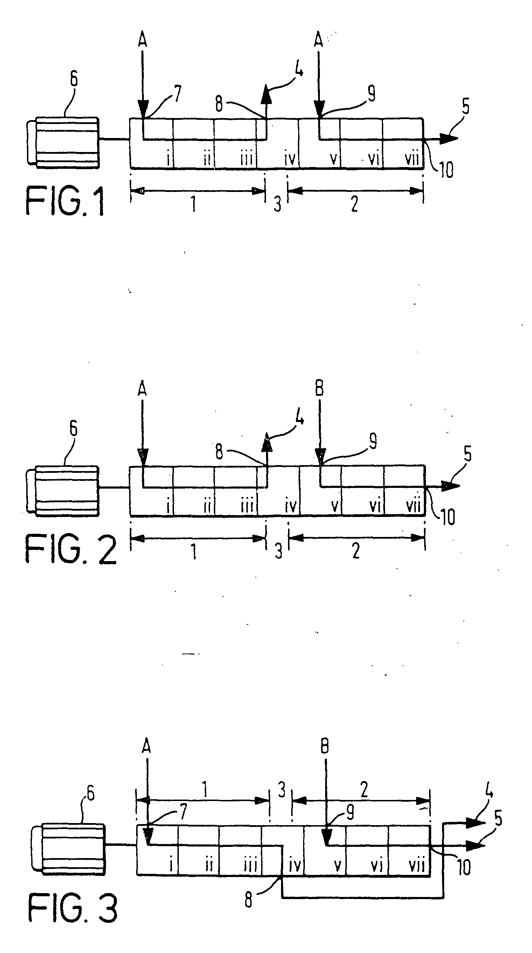

Dans la forme de réalisation représentée à la figure 1, la présente installation comprend un extrudeur bivis séparé en deux tronçons distincts 1 et 2 par un dispositif de séparation dynamique 3, au moins une filière 4 et 5 et au moins un dispositif de découpe non représenté.

Le bivis est entraîné par un moteur 6 et il est renfermé dans un fourreau à double paroi subdivisé en sept compartiments i-vii dans chacun desquels on peut faire circuler un fluide de refroidissement ou de réchauffement.

Dans cette installation, une première matière A est introduite dans le premier tronçon 1 au travers d'un dispositif d'alimentation comprenant une ouverture d'alimentation 7 prévue dans le premier compartiment i du fourreau. La masse de matière A traitée dans le premier tronçon 1 sort de l'extrudeur par une ouverture de sortie 8 prévue dans le compartiment iv du fourreau à hauteur du dispositif de séparation dynamique 3 et reliée à la filière 4.

Une deuxième matière A semblable à la première est introduite dans le deuxième tronçon 2 au travers d'un dispositif d'alimentation comprenant une ouverture d'alimentation 9 prévue dans le cinquième compartiment v du fourreau, en aval du dispositif de séparation dynamique 3. La masse de matière A traitée dans le deuxième tronçon 2 sort de l'extrudeur par une ouverture de sortie 10 prévue dans l'axe de son extrémité aval et reliée à la filière 5 semblable à la filière 4.

Dans la forme de réalisation représentée à la figure 2, la présente installation présente par rapport à la forme de réalisation représentée à la figure 1 des différences au niveau de la géométrie des vis.

Dans cette installation, une première matière A est traitée dans le premier tronçon 1 et une deuxième matière B différente de la première est traitée de manière différente dans le deuxième tronçon 2, les deux masses traitées étant extrudées en les faisant passer au travers des filières respectives 4 et 5 pour fabriquer des produits différents.

Dans la forme de réalisation représentée à la figure 3, la présente installation présente par rapport à la forme de réalisation représentée à la figure 2 des différences au niveau des filières 4 et 5 qui forment ici les éléments distincts d'une filière commune de coextrusion.

Dans cette installation, une première matière A est traitée dans le premier tronçon 1, une deuxième matière B différente de la première est traitée de manière différente dans le deuxième tronçon 2, et les deux masses traitées sont donc coextrudées.

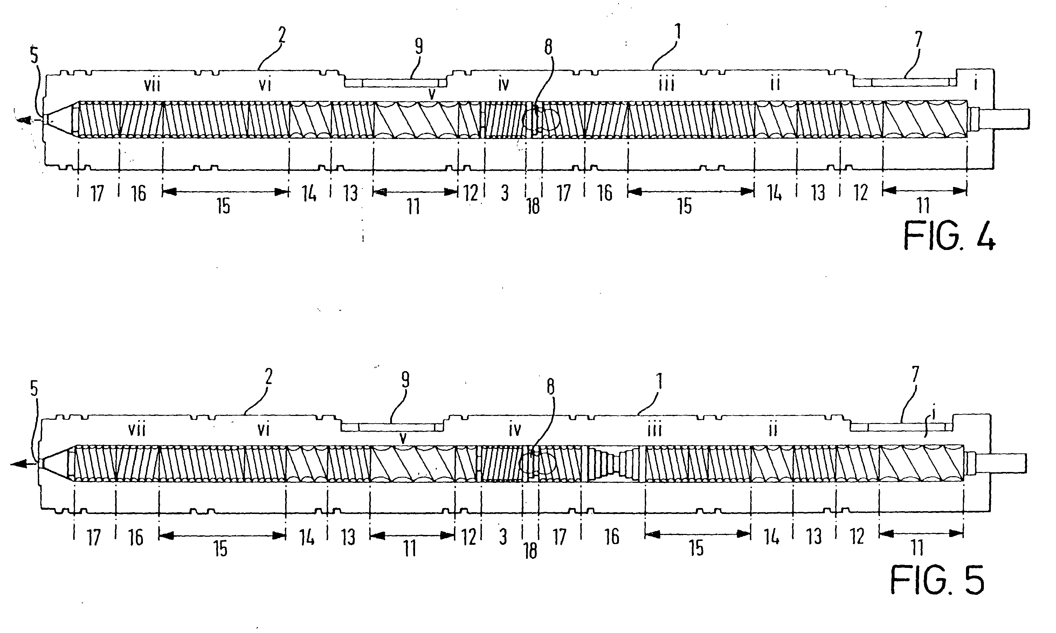

Dans la forme de réalisation représentée à la figure 4, la géométrie des vis est très semblable sur les deux tronçons 1 et 2 de l'extrudeur.

Dans le tronçon 1, les vis présentent successivement des zones de transport 11 (200/100), compactage 12 (100/50), compression 13 (100/33), transport intermédiaire 14 (100/66), compression 15 (100/35 + 200/28), pétrissage 16 (100/-33), compression 17 (100/35), expulsion 18 (trois bilobes de 12,5), et blocage 3 (100/-25).

Dans le tronçon 2, les vis présentent successivement des zones de compactage 12 (50/50), transport 11 (200/100), compression 13 (100/33), transport 14 (100/66), compression 15 (100/35 + 200/28), pétrissage 16 (100/-33) et compression 17 (100/35).

Les chiffres entre parenthèses donnent la longueur de la zone et la longueur du pas en mm, pour des vis de 88 mm de diamètre et un entre-axes de 72 mm, l'installation comprenant en l'occurrence un extrudeur bivis CLEXTRAL BC-72.

La géométrie représentée n'est pas limitée à ces dimensions données à titre d'exemple. Elle peut être transposée sur d'autres modèles d'extrudeurs, notamment les modèles BC-45 (vis de 55 mm de diamètre, entre-axes de 45 mm) ou BC-72 (vis de 115 mm de diamètre, entre-axes de 92 mm) de la même série, par exemple.

Les pas de vis sont de préférence doubles, excepté le pas inverse de la zone de blocage qui est de préférence simple.

Au contraire du pas inverse de la zone de pétrissage 16 qui présente sur son pourtour des encoches pour le passage de la masse traitée, le pas inverse de la zone de blocage 3 n'en présente aucune de manière à pouvoir jouer avec la plus grande efficacité son rôle de dispositif de séparation dynamique.

L'ouverture de sortie 8 du premier tronçon 1 de l'extrudeur présente une forme oblongue axiale, en l'occurrence la forme d'un huit, couvrant toute la longueur de la zone d'expulsion 18, à cheval sur la zone de compression 17 et la zone de blocage 3.

Dans la forme de réalisation représentée à la figure 5, la géométrie des vis sur le deuxième tronçon 2 de l'extrudeur est semblable à celle représentée à la figure 4. Par contre, la géométrie des vis sur le premier tronçon 1 en diffère quant à la zone de compression 15 (100/35 + 50/35 + 100/28 au lieu de 100/35 + 200/28). Elle en diffère aussi quant à la zone 16 qui est ici une zone de mélange formée de 10 bilobes de 15 mm d'épaisseur, au lieu d'une zone de pétrissage.

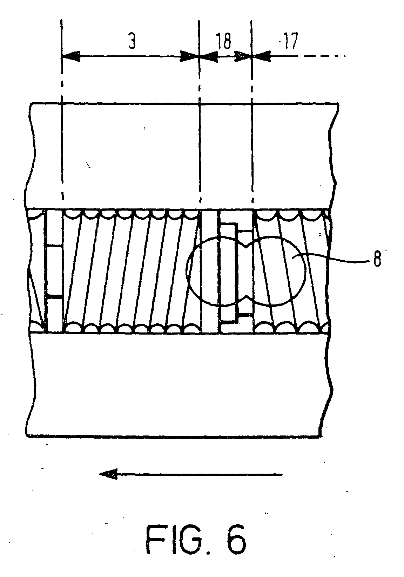

On voit plus en détail à la figure 6 comment l'ouverture de sortie 8 du premier tronçon 1 de l'extrudeur couvre toute la longueur de la zone d'expulsion 18, à cheval sur la zone de compression 17 et la zone de blocage 3. On a constaté en particulier qu'il est essentiel que cette ouverture empiète sur la zone de blocage 3, à raison d'une fraction de la longueur de l'ouverture correspondant à environ 0,1 - 0,3 fois le diamètre de la vis, par exemple, afin que la matière saisie par le ou les premiers pas de la vis inverse puisse être refoulée et expulsée efficacement.

Il est également important, pour assurer une bonne séparation dynamique, que la zone de blocage soit suffisamment longue, à savoir qu'elle présente une longueur au moins égale au diamètre des vis, pour un pas de vis inverse compris entre environ 1/5 et 1/3 de ce diamètre, par exemple.

Les exemples ci-après sont présentés à titre d'illustration du procédé selon la présente invention et des produits qu'il permet d'obtenir. Les pourcentages et parties y sont indiqués en poids.

Dans ces exemples, l'huile peut être choisie, s'il y a lieu, en fonction du rôle physique qu'elle joue dans la masse traitée et extrudée, et en fonction de son goût, neutre ou non. On peut la choisir parmi les huiles de palmiste, d'arachide ou de maïs, par exemple.

Dans ces exemples également, le mélange de farines, l'huile et l'eau sont introduits, le cas échéant, individuellement dans l'ouverture d'alimentation du tronçon d'extrudeur concerné.

### Exemple 1

On utilise une installation telle que représentée aux figures 1 et 4. Les filières d'extrusion sont réalisées sous forme de plaques percées chacune de 6 conduits d'extrusion cylindriques de 3,5 mm de diamètre.

On fabrique avec cette installation un seul et même produit de céréales pour petit déjeuner avec les composants et dans les conditions présentées dans les tableaux 1a) et 1b) ci-après.

Le tableau 1a) présente les composants d'un mélange de farines, leurs proportions dans un mélange type et les domaines de leurs proportions possibles.

Le tableau 1b) présente les quantités des composants introduits dans chaque tronçon de l'installation par heure, la teneur en eau de la matière ou de la masse traitée et les conditions opératoires.

**Tableau 1a)**

| Mélange de farines | | |
|---|---|---|
| Composant | Mélange type (%) | Domaine possible (%) |
| Farine de maïs | 20 | 0 - 80 |
| Farine de blé | 64 | 0 - 80 |
| Fraine d'avoine | 10 | 0 - 80 |
| Sucre | 4.9 | 2 - 12 |
| Sel | 1 | 0 - 3 |
| Vitamines et oligoéléments | 0.1 | 0.1 - 0.2 |
| Total | 100 | 100 |

**Tableau 1b)**

| Conditions opératoires | | | |
|---|---|---|---|
| Paramètre | Unités | Valeur | Domaine possible |
| Mélange de farines | kg/h | 300 | 200 - 350 |
| Huile de palmiste | kg/h | 10 | 0 - 20 |
| Eau | kg/h | 20 | 10 - 30 |
| Teneur en eau de la masse | % | 16.1 | 14 - 22 |
| Vitesse de rotation des vis | rpm | 350 | 250 - 450 |
| Température de la masse dans l'extrudeur | °C | 162 | 150 - 170 |
| Pression du produit dans l'extrudeur | bar | 132 | 80 - 150 |
| Ampérage | A | 294 | 200 - 400 |
| Temps de séjour dans chaque tronçon | s | 30 | 20 - 45 |
| Densité du produit extrudé | g/l | 115 | 50 - 160 |

On obtient ainsi des céréales pour petit déjeuner présentant la forme de boulettes de 8 à 12 mm de diamètre.

### Exemple 2

On utilise une installation telle que représentée aux figures 2 et 5. Les filières d'extrusion sont réalisées sous forme de plaques percées chacune de 6 conduits d'extrusion cylindriques de 3,5 mm de diamètre.

On fabrique avec cette installation deux produits différents de céréales pour petit déjeuner avec les composants et dans les conditions présentées dans les tableaux 2a) et 2b) ci-après.

Le tableau 2a) présente les composants de mélanges de farines, leurs proportions dans deux mélanges types A et B, et les domaines de leurs proportions possibles.

Le tableau 2b) présente les quantités des composants introduits dans chaque tronçon de l'installation par heure, la teneur en eau des matières ou des masses traitées et les conditions opératoires.

Pour le traitement de la masse A une injection de vapeur est prévue dans le premier tronçon à la hauteur de la zone de transport intermédiaire 14.

**Tableau 2a)**

| Mélanges de farines | | | | |
|---|---|---|---|---|
| Composant | Mélange A (%) | Mélange B (%) | Domaine mél. A (%) | Domaine mél. B (%) |
| Farine de maïs | 91 | 20 | 85 - 98 | 0 - 80 |
| Farine de blé | - | 64 | - | 0 - 80 |
| Farine d'avoine | - | 10 | - | 0 - 80 |
| Sucre | 6.9 | 4.9 | 0 - 12 | 0 - 12 |
| Sel | 2 | 1 | 0 - 3 | 0 - 3 |
| Vitamines et oligoéléments | 0.1 | 0.1 | 0.1 - 0.2 | 0.1 - 0.2 |
| Total | 100 | 100 | 100 | 100 |

**Tableau 2b)**

| Conditions opératoires | | | |
|---|---|---|---|
| Paramètre | Unités | Valeur | Domaine possible |
| Mélange farines A | kg/h | 200 | 150 - 300 |
| Vapeur | kg/h | 15 | 0 - 25 |
| Eau | kg/h | 35 | 0 - 60 |
| Teneur en eau A | % | 28.8 | 24 - 36 |
| Mélange farines B | kg/h | 180 | 150 - 300 |
| Huile | kg/h | 13 | 0 - 25 |
| Eau | kg/h | 14 | 0 - 25 |
| Teneur en eau B | % | 16.3 | 14 - 23 |
| Vitesse de rotation des vis | rpm | 250 | 200 - 450 |
| Température masse A | °C | 125 | 100 - 140 |
| Pression masse A | bar | 26 | 20 - 100 |
| Température masse B | °C | 170 | 140 - 180 |
| Pression masse B | bar | 132 | 80 - 150 |
| Ampérage | A | 184 | 150 - 400 |
| Residence Time | s | 30 | 20 - 45 |
| Densité (B) | g/l | 103 | 60 - 160 |

On obtient ainsi deux produits différents de céréales pour petit-déjeuner sous forme de boulettes expansées de 8-12 mm de diamètre.

### Exemple 3

On utilise une installation telle que représentée aux figures 3 et 5. La filière de coextrusion comporte deux exemplaires d'une combinaison d'une ouverture d'extrusion annulaire A de 8 mm de diamètre intérieur et 12 mm de diamètre extérieur entourant une ouverture d'extrusion circulaire B de 6 mm de diamètre.

On fabrique avec cette installation un produit de céréales composite coextrudé avec les composants et dans les conditions présentées dans les tableaux 3a) et 3b) ci-après.

Le tableau 3a) présente les composants de mélanges de farines, leurs proportions dans deux mélanges types A et B, et les domaines de leurs proportions possibles.

Le tableau 3b) présente les quantités des composants introduits dans chaque tronçon de l'installation par heure, la teneur en eau des matières ou des masses traitées et les conditions opératoires.

**Tableau 3a)**

| Mélanges de farines | | | | |
|---|---|---|---|---|
| Composants | Mélange A (%) | Mélange B (%) | Domaine mél. A (%) | Domaine mél. B (%) |
| Farine de maïs | 64 | 20 | 0 - 80 | 0 - 80 |
| Farine de blé | 20 | 64 | 0 - 80 | 0 - 80 |
| Farine d'avoine | 10 | 10 | 0 - 80 | 0 - 80 |
| Sucre | 4.9 | 4.9 | 0 - 12 | 0 - 12 |
| Sel | 1 | 1 | 0 - 3 | 0 - 3 |
| Vitamines et oligoéléments | 0.1 | 0.1 | 0.1 - 0.2 | 0.1 - 0.2 |
| Total | 100 | 100 | 100 | 100 |

**Tableau 3b)**

| Conditions opératoires | | | |
|---|---|---|---|
| Paramètre | Unités | Valeur | Domaine possible |
| Mélange farines A | kg/h | 120 | 120 - 240 |
| Huile | kg/h | 11 | 10 - 20 |
| Eau | kg/h | 21 | 10 - 40 |
| Teneur en eau masse A | % | 22.5 | 14 - 23 |
| Mélange farines B | kg/h | 230 | 200 - 300 |
| Huile | kg/h | 8 | 8 - 16 |
| Eau | kg/h | 16 | 10 - 40 |
| Teneur en eau masse B | % | 16.3 | 14 - 23 |
| Vitesse rotation des vis | rpm | 340 | 200 - 450 |
| Température masse | °C | 154 | 140 - 180 |
| Pression masse | bar | 81 | 80 - 150 |
| Ampérage | A | 197 | 150 - 300 |
| Temps de résidence | s | 30 | 25 - 45 |
| Densité | g/l | 104 | 60 - 160 |

On obtient ainsi des céréales coextrudées pour petit déjeuner présentant une forme semblable à la planète saturne entourée de son anneau, le contraste entre la sphère et l'anneau étant renforcé par une différence de teintes et de textures, le diamètre du centre sphérique étant de 12-16 mm, le bord intérieur de l'anneau étant soudé à un équateur de la sphère, et le diamètre extérieur de l'anneau étant de 18-24 mm.

## Revendications

1. Procédé de fabrication d'un produit alimentaire par extrusion, dans lequel on introduit une première matière alimentaire à traiter dans un premier tronçon (1) d'un extrudeur bivis, on introduit une deuxième matière alimentaire à traiter dans un deuxième tronçon (2) de l'extrudeur bivis séparé du premier par un dispositif de séparation dynamique (3), on traite ces matières indépendamment chacune dans son tronçon de l'extrudeur, on extrude les deux masses obtenues en les faisant passer au travers d'au moins une filière (4, 5) et l'on découpe le ou les produits extrudés.

2. Procédé selon la revendication 1, dans lequel on traite une première matière et/ou une deuxième matière présentant une teneur en eau de 14-22% pour obtenir un produit expansé.

3. Procédé selon la revendication 2, dans lequel on déshydrate un tel produit expansé découpé jusqu'à une teneur en eau inférieure à 5%.

4. Procédé selon la revendication 1, dans lequel on traite une première et/ou une deuxième matière présentant une teneur en eau de 24-36% pour obtenir un produit non ou peu expansé.

5. Procédé selon la revendication 4, dans lequel on transforme en flocons le produit non ou peu expansé découpé par laminage et toastage.

6. Procédé selon la revendication 1, dans lequel la première matière et la seconde matière sont semblables et on les traite chacune dans son tronçon de manières semblables.

7. Procédé selon la revendication 1, dans lequel la première matière et la seconde matière sont différentes et on les traite chacune dans son tronçon de manières différentes.

8. Procédé selon la revendication 3, dans lequel on fait passer les deux masses de matière traitée au travers de deux filières (4, 5) semblables ou au travers d'orifices semblables d'une filière commune.

9. Procédé selon la revendication 4, dans lequel on fait passer chacune des deux masses de matières traitées au travers d'orifices différents (4, 5) d'une filière commune.

10. Procédé selon la revendication 4, dans lequel on coextrude les deux masses de matières traitées.

11. Installation pour la mise en oeuvre du procédé selon revendication 1, comprenant un extrudeur bivis séparé en deux tronçons distincts (1, 2) par un dispositif de séparation dynamique (3), une ouverture d'alimentation (7) pour le premier tronçon (1), une ouverture d'alimentation (9) pour le deuxième tronçon (2), au moins une filière d'extrusion (4, 5) et au moins un dispositif de découpe.

12. Installation selon la revendication 11, dans laquelle le dispositif de séparation dynamique (3) comprend une zone de blocage à pas inverse du bivis.

13. Installation selon la revendication 11, dans laquelle une ouverture (8) de sortie du premier tronçon (1) de l'extrudeur est prévue à cheval sur une zone de compression (17) et la zone de blocage (3) du bivis.

## Patentansprüche

1. Verfahren zur Herstellung eines Nahrungsmittelprodukts durch Extrusion, bei dem man ein erstes zu behandelndes Nahrungsmittelmaterial in ein erstes Teilstück (1) eines Zweischneckenextruders einführt, ein zweites zu behandelndes Nahrungsmittelmaterial in ein zweites Teilstück (2) des Zweischneckenextruders einführt, das von dem ersten durch eine dynamische Trennvorrichtung (3) getrennt ist, diese Materialien in ihren jeweiligen Extruderteilstücken unabhängig behandelt, die beiden erhaltenen Massen extrudiert, indem man sie durch mindestens eine Düse (4, 5) hindurchtreten lässt, und das oder die extrudierten Produkte zerschneidet.

2. Verfahren nach Anspruch 1, bei dem man ein erstes Material und/oder ein zweites Material mit einem Wassergehalt von 14-22% behandelt, um ein expandiertes Produkt zu erhalten.

3. Verfahren nach Anspruch 2, bei dem man ein derartiges zerschnittenes expandiertes Produkt bis zu einem Wassergehalt unter 5% entwässert.

4. Verfahren nach Anspruch 1, bei dem man ein erstes und/oder ein zweites Material mit einem Wassergehalt von 24-36% behandelt, um ein nicht oder wenig expandiertes Produkt zu erhalten.

5. Verfahren nach Anspruch 4, bei dem man das zerschnittene, nicht oder wenig expandierte Produkt durch Walzen und Rösten in Flocken umwandelt.

6. Verfahren nach Anspruch 1, bei dem das erste Material und das zweite Material ähnlich sind und in ihren jeweiligen Teilstücken auf ähnliche Weisen behandelt werden.

7. Verfahren nach Anspruch 1, bei dem das erste Material und das zweite Material verschieden sind und in ihren jeweiligen Teilstücken auf verschiedene Weisen behandelt werden.

8. Verfahren nach Anspruch 3, bei dem man die beiden Massen von behandeltem Material durch zwei ähnliche Düsen (4, 5) oder durch ähnliche Öffnungen einer gemeinsamen Düse hindurchtreten lässt.

9. Verfahren nach Anspruch 4, bei dem man jede der beiden Massen von behandeltem Material durch verschiedene Öffnungen (4, 5) einer gemeinsamen Düse hindurchtreten lässt.

10. Verfahren nach Anspruch 4, bei dem man die beiden Massen von behandeltem Material koextrudiert.

11. Anlage für die Durchführung des Verfahrens nach Anspruch 1, die einen Zweischneckenextruder, der durch eine dynamische Trennvorrichtung (3) in zwei getrennte Teilstücke (1, 2) geteilt ist, eine Versorgungsöffnung (7) für das erste Teilstück (1), eine Versorgungsöffnung (9) für das zweite Teilstück (2), mindestens eine Extrusionsdüse (4, 5) und mindestens eine Schneidvorrichtung aufweist.

12. Anlage nach Anspruch 11, bei der die dynamische Trennvorrichtung (3) einen Blockierbereich mit umgekehrter Steigung der Doppelschnecke umfasst.

13. Anlage nach Anspruch 11, bei der eine Austrittsöffnung (8) des ersten Teilstücks (1) des Extruders überlappend auf einem Kompressionsbereich (17) und auf dem Blockierbereich (3) der Doppelschnecke vorgesehen ist.

## Claims

1. Process for manufacturing a food product by extrusion, wherein a first food material to be processed is introduced into a first section (1) of a twin-screw extruder, a second food material to be processed is introduced into a second section (2) of the twin-screw extruder separated from the first by a dynamic separating device (3), these materials are treated separately, each in its section of the extruder, the two masses obtained are extruded by passing them through at least one die (4, 5) and the extruded product/products is/are cut up.

2. Process according to claim 1, wherein a first material and/or a second material is/are treated having a water content of 14-22 % so as to obtain an expanded product.

3. Process according to claim 2, wherein a cut expanded product of this type is dehydrated to a water content of less than 5 %.

4. Process according to claim 1, wherein a first material and/or a second material is/are treated having a water content of 24-36 % so as to obtain a non-expanded or only slightly expanded product.

5. Process according to claim 4, wherein the non-expanded or only slightly expanded cut product is converted into flakes by rolling and toasting.

6. Process according to claim 1, wherein the first material and the second material are similar and each one is treated in its section in a similar manner.

7. Process according to claim 1, wherein the first material and the second material are different and each one is treated in its section in a different manner.

8. Process according to claim 3, wherein the two masses of treated material are passed through two similar dies (4, 5) or through similar orifices of a common die.

9. Process according to claim 4, wherein each of the two masses of treated material is passed through a different orifice (4, 5) of a common die.

10. Process according to claim 4, wherein the two masses of treated material are coextruded.

11. Installation for implementing the process according to claim 1, comprising a twin-screw extruder separated into two distinct sections (1, 2) by a dynamic separating device (3), a feed opening (7) for the first section (1), a feed opening (9) for the second section (2), at least one extrusion die (4, 5) and at least one cutting device.

12. Installation according to claim 11, wherein the dynamic separating device (3) includes a blocking zone of the twin screw with a reverse pitch.

13. Installation according to claim 11, wherein an outlet opening (8) of the first section (1) of the extruder is provided spanning a compression zone (17) and the blocking zone (3) of the twin screw.
